(19) Europäisches Patentamt
European Patent Office
Office européen des brevets

(11) Publication number : **0 577 508 A1**

(12) **EUROPEAN PATENT APPLICATION**

(21) Application number : **93401687.4**

(22) Date of filing : **30.06.93**

(51) Int. Cl.$^5$ : **C08G 63/91,** C08G 63/672, C08G 59/18, C08K 5/13, C08K 5/15, C08L 67/02

(30) Priority : **30.06.92 KR 9211506**

(43) Date of publication of application : **05.01.94 Bulletin 94/01**

(84) Designated Contracting States : **DE FR GB IT**

(71) Applicant : **CHEIL SYNTHETICS INC.**
**1, Chungsan-Dong**
**Kyungsan-city, Kyungsang buk-Do (KR)**

(72) Inventor : **Kim, Kwang Tae**
**Hanbo Meedo Apartment 101-707, 452, Daechi-Dong**
**Kangnam-ku, Seoul (KR)**
Inventor : **Ihm, Dae Woo**
**Sangah Apartment 3-907, 165 Ohgeum-Dong**
**Songpa-ku, Seoul (KR)**
Inventor : **Baek, Moon Soo**
**Dongsin Apartment Da-805, Dokok-Dong**
**Kangnam-ku, Seoul (KR)**
Inventor : **Lee, Young Choon**
**Jugong 3 cha Apartment 347-104, Banpo-Dong**
**Seocho-ku, Seoul (KR)**

(74) Representative : **Le Roux, Martine et al**
**Cabinet Beau de Loménie 158, rue de l'Université**
**F-75340 Paris Cédex 07 (FR)**

(54) **Modification of polyetherester elastomers.**

(57) A method for preparation of a novel polyether-ester elastomer having a good melt strength, a good melt viscosity and improved cure rate and suitable for extrusion and blow moldings. The method comprises the steps of mixing a phenol alkali metal salt with an epoxy compound, such as a diepoxy compound or a triepoxy compound, at the same time of heating at a temperature not higher than 100 °C, and thereafter, mixing the result mixture with a polyether-ester elastomer comprising short chain ester units represented by the formula (I) and long chain ether units represented by the formula (II) :

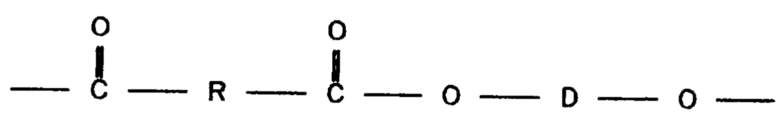
(I)

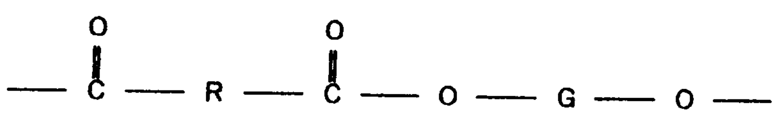
(II)

wherein R is a residual biradical obtained as a result of removing carboxyl group from a dicarboxylic acid having a molecular weight not higher than 400, D is a residual biradical obtained as a result of removing hydroxyl group from a short chain diol, and G is a residual biradical obtained as a result of removing hydroxyl group from a long chain ether glycol having a molecular weight of about 600 - 4,000.

EP 0 577 508 A1

## BACKGROUND OF THE INVENTION

### Field of the Invention

The present invention relates in general to a method for preparation of a polyether-ester elastomer having high cure rate, good melt viscosity and other excellent properties suitable for extrusion and blow moldings.

### Description of the Prior Art

As known to those skilled in the art, thermoplastic polyether-ester elastomers are block copolymers wherein rubber-like polyether soft segments and plastic-like polyester hard segments are alternately linked to one another. In this regard, they typically have excellent rubber-like properties, such as low-temperature durability, flexibility, elastic recovery (elasticity) ... thanking for the soft segments, and excellent plastic properties, such as mechanical strength, heat resistance, moldability and the like, thanking for the hard segments. Such polyether-ester elastomers are thus useful for (flexible) hoses, belts, industrial elements, sport articles, automobile elements...

However, it is known that these polyether-ester elastomers are not suited to a blow molding due to their low melt strength and low melt viscosity. Furthermore, in the case of high content of soft segments, the polyether-ester elastomers have serious disadvantages in moldability due to the low cure rate.

In an effort to solve the above problems, there have been proposed several methods for improving the melt strength, the melt viscosity and the cure rate of the polyether-ester elastomer. As an example of the known methods, butadiene/acrylonitrile, i.e., nitrile rubber (NBR), a class of nitrile copolymers, is blended with the elastomers, and ethylene/methacrylic acid ionomer, a class of polymerized carboxylate, is added to the elastomers. However, these methods have a disadvantage in that they cause a phase separation in the elastomers during the molding process nevertheless they efficiently improve the melt strength of the result elastomers. Aliphatic alkaline salts may be added to the elastomers so as to make the result elastomers be improved in the melt strength and the cure rate. However, this method is not preferably used since it detrimentally affects the melt stability of the result elastomers.

In another method, crosslinking of the elastomer may be achieved using primary amine or secondary amine as a crosslinking agent, thus improving the melt strength of the result elastomers as well as the viscosity. However, this method is attended with a problem in moldability of the result elastomer because it reduces the cure rate of the result elastomer.

## SUMMARY OF THE INVENTION

An object of this invention is to provide a method for preparation of a novel polyether-ester elastomer having a good melt strength, a good melt viscosity and improved cure rate.

In order to accomplish the above object, the present invention provides a method for preparation of a polyether-ester elastomer suitable for extrusion and blow moldings, said method comprising the steps of mixing a phenol alkali metal salt with an epoxy compound, such as a diepoxy compound or a triepoxy compound, at the same time or neating at a temperature not higher than 100 °C, and mixing the result mixture with a polyether-ester elastomer comprising long chain ether units and short chain ester units, thereby improving the melt strength, the melt viscosity and the cure rate of the result polyether-ester elastomer.

## DETAILED DESCRIPTION OF PREFERRED EMBODIMENTS

The polyether-ester elastomer according to the present invention is prepared by mixing an elastomer comprising advantageously about 10 to 75 weight percent of long chain ether units and about 25 to 90 weight percent of short chain ester units with a phenol alkali metal salt mixed with an epoxy compound, such as a diepoxy compound or a triepoxy compound or a mixture thereof. Here, the short chain polyester comprises a dicarboxylic acid and a short chain diol, whilst the long chain polyether comprises a dicarboxylic acid and an aliphatic polyglycol. The dicarboxylic acid may be selected from the group of terephthalic acid, isophthalic acid, naphthalene dicarboxylic acid, adipic acid, sebacic acid ... The short chain diol is a low molecular weight diol having a molecular weight not more than 250 and preferably about 2 to 15 carbon atoms, for example, ethylene glycol, propylene glycol, 1,4-butane diol, pentamethylene glycol, decamethylene glycol, 1,6-hexane diol, cyclohexane dimethanol or the like.

On the other hand, the aliphatic polyglycol is selected from the group of polyethylene glycol, polyisopropylene glycol, polyoxytetramethylene glycol, polyoxyoctamethylene glycol, polyoxypentamethylene glycol ...

It is preferred to use a polyglycol having a molecular weigh of about 600 - 4,000 and to add the polyglycol in an amount of about 0.02 to 0.3 mole with respect to 1 mole of dicarboxylic acid.

The polyether-ester elastomer to be mixed with the phenol alkali metal salt and the epoxy compound according to this invention comprises the units represented by the formulae (I) and (II), respectively:

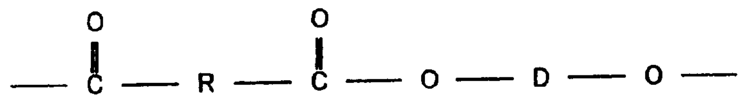
(I)

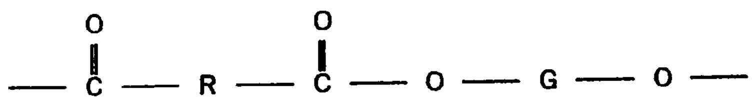
(II)

wherein R is a residual biradical obtained as a result of removing carboxyl group from the dicarboxylic acid having a molecular weight not higher than 400, D is a residual biradical obtained as a result of removing hydroxyl group from a short chain diol having a molecular weight not higher than 250 and G is a residual biradical obtained as a result of removing hydroxyl group from a long chain ether glycol having a molecular weight of about 600 - 4,000. The formula (I) represents the short chain ester hard segment providing the result elastomer with good mechanical properties, whilst the formula (II) represents the long chain ether soft segment providing the result elastomer with good elasticity and flexibility.

In order to prepare the improved polyether-ester elastomer of this invention, the polyether-ester elastomer comprising the segments represented by the formulae (I) and (II) is mixed with a phenol alkali metal salt and an epoxy compound, such as a diepoxy, a triepoxy or a mixture thereof. The phenol alkali metal salt is that alkali metal bonded to phenols having at least one hydroxyl group. One or several hydroxyl groups of phenols (or polyhydric phenols) are salified (ex : disodium resorcinol, disodium hydroquinone, dipotassium resorcinol). The phenol alkali metal salt is represented by the formula (III):

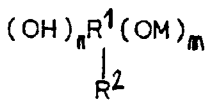
(III)

wherein

$R^1$ is an aromatic compound selected from the group consisting in benzene, naphthalene, anthracene and phenanthrene, m and n are integers of 0-5, respectively, such as that the sum thereof does not exceed 5, $R^2$ is a substituent of $R^1$ choosen amongst a $C_1$-$C_{20}$ alkyl group, a $C_5$-$C_{10}$ aryl group, a halogen (F, Cl, Br, I) which may replace one or several hydrogen atom (s) of $R^1$, M is an alkali metal, such as sodium, potassium... The representative phenol compound is ortho-cresol, meta-cresol, para-chlorophenol, para-phenylphenol, para-cyclohexylphenol, hydroquinone catechol, resorcinol, pyrogallol, alpha-naphthol, beta-naphthol or the like. In addition, polyhydric phenol is advantageously used in this invention because monohydric phenol generally causes environmental pollution. The phenol alkali metal salt shows effective result when it is added in an amount of about 0.05 to 10 percent by weight of the elastomer.

On the other hand , the epoxy compound used in this invention has two or three epoxy groups in a molecule and is advantageously selected from the group of the epoxy compounds represented by the formulae (IV) - (VIII) :

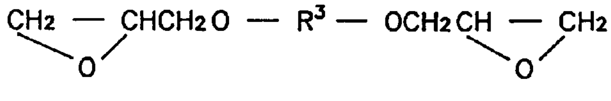
------- ( IV )

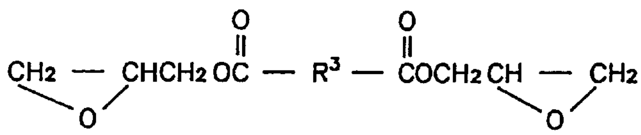 ------- ( V )

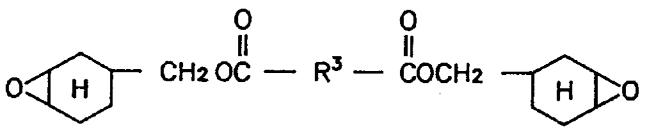 ------- ( VI )

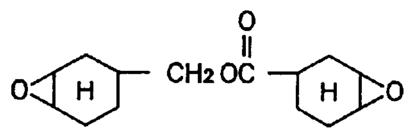 --------- ( VII )

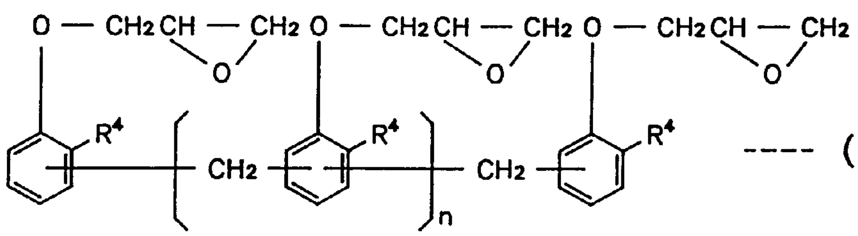 ---- ( VIII )

In the formulae (IV) - (VIII), $R^3$ is a linear or branched alkylene group having 2 to 6 carbon atoms such as ethylene, propylene, tetramethylene, hexamethylene and 2,2-dimethyltrimethylene ; a $C_5$-$C_{20}$ aromatic group, such as ortho-phenylene, meta-phenylene, para-phenylene, bis-phenylene, 4,4'-isopropylidenbisphenylene and 4,4'-sulfonyl-diphenylene or a polyether group represented by the formula $\left( R^5O \right)_n R^5$ - wherein $R^5$ is a hydrocarbon having 1 - 10 carbon atoms and n is an integer between 1 -20. In the formula (VIII), $R^4$ is hydrogen or a $C_1$-$C_3$ alkyl group such as methyl, ethyl and propyl.

It is preferred to add the epoxy compound in an amount of 1.0 - 7.0 percent by weight of the polyetherester elastomer. Here, when the epoxy compound is added in an amount less than 1.0 weight percent, the viscosity amelioration effect is reduced, whilst addition of the epoxy compound in an amount more than 7.0 weight percent deteriorates the surface condition of the result molding product. Examples of the epoxy compounds suitable for used in this invention are given in Table 1.

In the present invention, the phenol alkali metal salt and the epoxy compound are preferred to be added to the elastomer while being compounded with the elastomer since addition of the above additives to the elastomer in polymerizing step causes deterioration of the polymerization degree of the elastomer as well as a problem in extrusion of the result elastomer.

In this regard, the phenol alkali metal salt in the form of granule and the epoxy in the form of granule or liquid are mixed with each other at the same time of heating at a temperature not higher than 100 °C. The result mixture is then added to a double screw kneading machine, or an extruder, together with the pellet elastomer comprising the units represented by the formulae (I) and (II), respectively.

In addition, the reaction is carried out in presence of an antioxidant, preferably phenols, a light stabilizer, preferably benzotriazols, and a reaction catalyst. The reaction catalyst may be preferably selected from the group of organic titanates and organic magnesium salts. Particularly in the present invention, tetrabutyl titanate, magnesium acetate or a mixture thereof is used as the reaction catalyst. From the viewpoint of the reaction effect, it is preferred to add the reaction catalyst in an amount of about 0.001 - 2.0 percent by weight of the elastomer.

## TABLE 1

| SECTION | EPOXY COMPOUNDS |
|---|---|
| A | 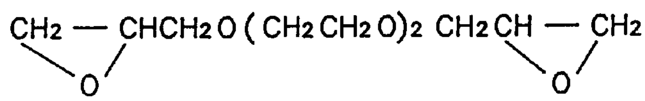 |
| B | 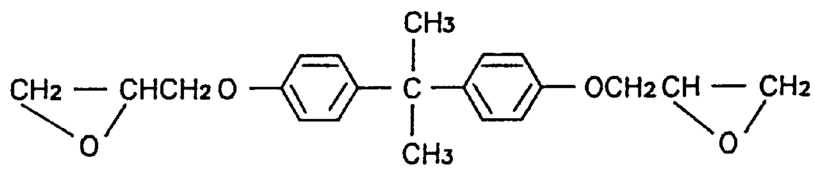 |
| C | 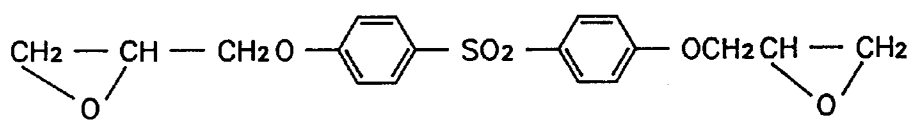 |
| D | 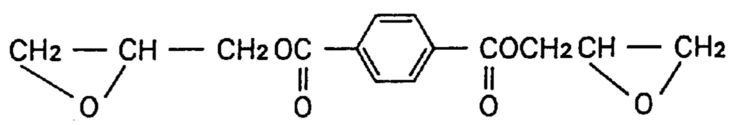 |
| E | 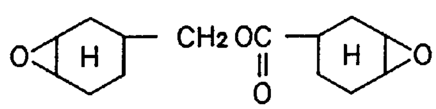 |
| F | 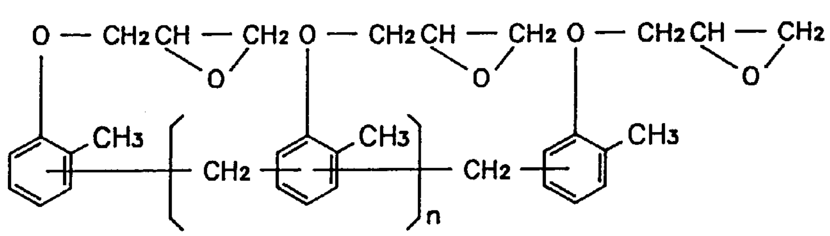 |

The following examples and comparative examples are merely intended to illustrate the present invention in further detail and should by no means be considered limitative of the scope of the invention.

EXAMPLE 1

An ether-ester copolymer was prepared by the following process. A flask equipped with a distillation column and a stainless steel stirrer provided with a paddle having the shape of the same length as an inner radius of the flask and rotatably disposed at a position of 3 mm below the flask bottom was charged with the following start materials:

100 weight parts (hereinafter, the weight part being referred to simply as "part") of dimethylterephthalate, 125 parts of 1,4-butanediol, 75 parts of polytetramethylene glycol (having average molecular weight of 1,000), 0.2 part of tetrabuthyl titanate (prepared as a slurry type mixed with 1,4-butanediol) and 0.1 part of magnesium acetate.

The inner temperature of the flask was, thereafter, slowly raised from 150 °C to 200 °C for one hour, and thereafter, the extraction amount of methanol was measured. When the extraction amount of the methanol reached 70 percent of an ideal extraction amount, 0.1 part of tetrabutyl titanate as the catalyst, 0.4 part of 2,6-ditert-butyl-4-methylphenol as the antioxidant and 0.8 part of 2-(2-hydrogen-benzotriazol-2-yl)-4-methyl-6-dodecylphenol as the light stabilizer were added to the flask in the form of slurry mixed with 1,4-butanediol, thereafter, the flask was heated to 220 °C.

At this time, the end reaction of the ester interchange was preferably carried out within about 20 minutes; otherwise, a lot of tetrahydrofuran gas would be generated in the reaction flask and detrimentally affect the reactivity and the color tone of the final elastomer.

After the ester interchange, the inner temperature of the reaction flask was slowly raised to 250 °C and the inner pressure of the flask was slowly reduced to be less than or equal to 1 mmHg for, preferably, 1 hour. When the desired degree of polymerization was achieved, the reaction was stopped. The result polymer or the elastomer was extruded in the form of strand and cooled by water, and sampled in the form of pellet.

The pellet elastomer was then dried using hot air of 90 °C for 4 hours. Thereafter, 0.5 percent (by weight of the pellet elastomer) of disodium resorcinol as a phenol alkali metal salt was mixed with 4.0 percent (by weight of the pellet elastomer) of the diepoxy A of the Table 1 as an epoxy compound at about 70 °C. The result mixture together with the dried pellet elastomer was, thereafter, charged in a double screw kneading machine and melted, and mixed with each other. The result polymer was extruded in the form of strand and cooled by water, and sampled in the form of pellet.

The result pellet elastomer was measured as having a melt index not higher than 10 at a temperature of 230 °C and a solution viscosity of 1.0 - 2.0. Here, the melt index was measured, by employing a melt indexer manufactured by Götfert GMBH of Germany, under the condition of a temperature of 230 °C and a load of 2.16 kg, whilst the solution viscosity was measured in an orthochlorophenol solution at 25 °C by employing the Wibellod method. The melt temperature (Tm) and the crystallization temperature (Tc) were measured by using a differential scanning calorimeter, and the cure rate was measured by subtracting the measured crystallization temperature (Tc) from the measured melt temperature (Tm), that is, Tm-Tc. At this time, in order to determine the melt temperature (Tm) and to completely melt the result pellet elastomer to be measured, the crystallization temperature (Tc) was determined in such a manner that it was maintained at a temperature higher than the melt temperature (Tm) by 30 °C, and thereafter, slowly dropped at a rate of 20 °C/min, and the temperature of the peak of the exothermic curve was defined as the crystallization temperature. The results, or the melt index, the melt viscosity, the melt temperature and the crystallization temperature, are shown in Table 2.

EXAMPLE 2

The procedure of Example 1 was repeated, substituting disodium hydroquinone as a phenol alkali metal salt for the disodium resorcinol. The results are shown in Table 2.

EXAMPLE 3

The procedure of Example 1 was repeated, substituting dipotassium resorcinol as a phenol alkali metal salt for the disodium resorcinol. The results are shown in Table 2.

EXAMPLE 4

The procedure of Example 1 was repeated, substituting the diepoxy compound B of Table 1 for the compound A. The results are shown in Table 2.

EXAMPLE 5

The procedure of Example 1 was repeated, substituting the diepoxy compound C for the compound A. The results are shown in Table 2.

EXAMPLE 6

The procedure of Example 1 was repeated, substituting the diepoxy compound D for the compound A. The results are shown in Table 2.

EXAMPLE 7

The procedure of Example 1 was repeated, substituting the diepoxy compound E for the compound A. The results are shown in Table 2.

EXAMPLE 8

The procedure of Example 1 was repeated, substituting the triepoxy compound F, wherein n is 1, for the compound A. The results are shown in Table 2.

COMPARATIVE EXAMPLE 1

The procedure of Example 1 was repeated, adding no phenol alkali metal salt and no epoxy compound. The results are shown in Table 2.

COMPARATIVE EXAMPLE 2

The procedure of Example 1 was repeated, adding no epoxy compound. The results are shown in Table 2.

COMPARATIVE EXAMPLE 3

The procedure of Example 1 was repeated, adding no phenol alkali metal salt. The results are shown in Table 2.

TABLE 2

| | Melt Index (g/10min) 230°C/2.16kg | Temp.* (°C) | Temp.** (°C) | Viscosity* (IV) |
|---|---|---|---|---|
| Ex. 1 | 1.5 | 190.7 | 158.5 | 1.60 |
| Ex. 2 | 1.8 | 191.2 | 153.2 | 1.52 |
| Ex. 3 | 1.6 | 189.3 | 149.3 | 1.58 |
| Ex. 4 | 2.7 | 188.5 | 155.3 | 1.38 |
| Ex. 5 | 3.2 | 189.8 | 150.7 | 1.32 |
| Ex. 6 | 2.5 | 190.5 | 151.6 | 1.35 |
| Ex. 7 | 4.5 | 193.1 | 156.3 | 1.27 |
| Ex. 8 | 2.2 | 191.7 | 143.5 | 1.30 |
| Comp.Ex. 1 | 18.3 | 192.5 | 120.1 | 1.12 |
| Comp.Ex. 2 | 12.5 | 190.3 | 130.5 | 1.21 |
| Comp.Ex. 3 | 10.3 | 190.1 | 125.2 | 1.32 |

Temp.*: melt temperature
Temp.**: crystallization temperature
Viscosity*: solution viscosity

## Claims

1. A method for preparation of a polyether-ester elastomer comprising the steps of:

   mixing a phenol alkali metal salt with an epoxy compound selected from the group of diepoxy compounds, triepoxy compounds and a mixture thereof at the same time of heating at a temperature not higher than 100 °C; and

   mixing the result mixture with a polyether-ester elastomer comprising short chain ester units represented by the formula (I) and long chain ether units' represented by the formula (II):

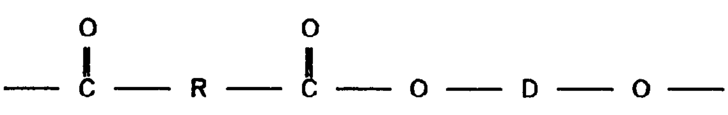

(I)

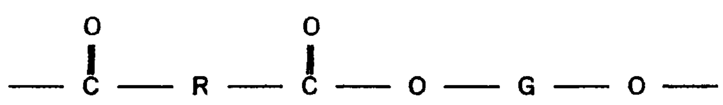

(II)

   wherein R is a residual biradical obtained as a result of removing carboxyl group from a dicarboxylic acid having a molecular weight not higher than 400, D is a residual biradical obtained as a result of removing hydroxyl group from a short chain diol having a molecular weight not higher than 250, and G is a

residual biradical obtained as a result of removing hydroxyl group from a long chain'ether glycol having a molecular weight of about 600 - 4,000.

2. The method according to claim 1, wherein said long chain ether units amounts to 10 - 75 percent by weight of said polyether-ester elastomer comprising said units represented by the formulae (I) and (II).

3. The method according to one of claims 1 or 2, wherein said phenol alkali metal salt is a compound represented by the formula (III):

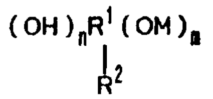

................. (III)

wherein
$R^1$ is an aromatic compound selected from the group consisting in benzene, naphtalene, anthracene and phenanthrene, $R^2$ is a substituent of $R_1$ choosen amongst a $C_1$-$C_{20}$ alkyl group, a $C_5$-$C_{10}$ aryl group or a halogen which may replace one or several hydrogen atom(s) of $R_1$, M is an alkali metal, and m and n are selected from integers of 0 - 5, respectively, such that the sum thereof does not exceed 5.

4. The method according to anyone of claims 1 to 3, wherein the phenol alkali metal salt amounts to about 0.05 to 10 percent by weight of said polyether-ester elastomer comprising the units represented by the formulae (I) and (II).

5. The method according to anyone claims 1 to 4, wherein said diepoxy or triepoxy is selected from the group of compounds represented by the formulae (IV) - (VIII).

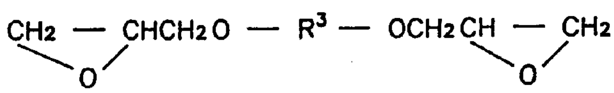

------- ( IV )

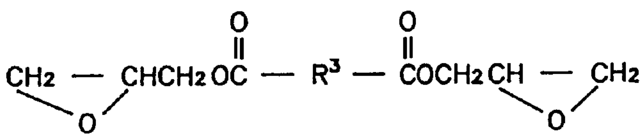

------- ( V )

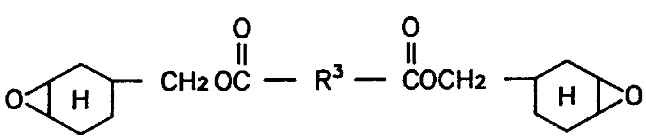

------- ( VI )

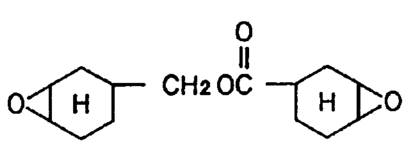

--------- ( VII )

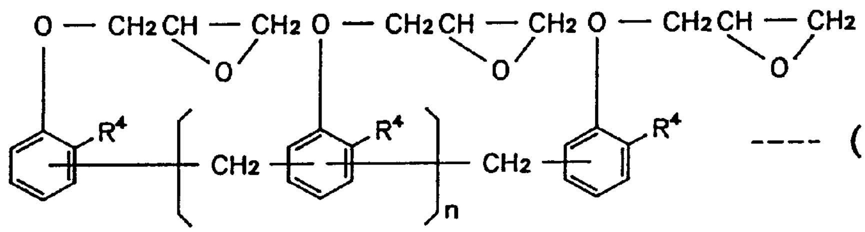

---- ( VIII )

wherein, in the formulae (IV) - (VIII), $R^3$ is a linear or branched alkylene group having 2 to 6 carbon atoms such as ethylene, propylene, tetramethylene, hexamethylene and 2,2-dimethyltrimethylene ; a $C_5$-$C_{20}$ aromatic group such as ortho-phenylene, meta-phenylene, para-phenylene, bis-phenylene, 4,4'-isopropylidenbisphenylene and 4,4'-sulfonyldiphenylene ; or a polyether represented by the formula $(R^5O)_n$ $R^5$ - wherein $R^5$ is a hydrocarbon having 1 -10 carbon atoms and n is an integer between 1 -20, in the formula (VIII), $R^4$ is hydrogen or a $C_1$-$C_3$ alkyl group such as methyl, ethyl or propyl.

**6.** The method according to anyone of claims 1 to 5, wherein said epoxy compound amounts to 1 - 7 percent by weight of said polyether-ester elastomer comprising the units represented by the formulae(I) and (II).

European Patent Office

# EUROPEAN SEARCH REPORT

Application Number

EP 93 40 1687

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 723 568 (G.K. HOESCHELE)<br>* claims 1-8; claim 1, lines 5-58; claim 5, line 22 - claim 7, line 45 *<br>--- | 1-6 | C 08 G 63/91<br>C 08 G 63/672<br>C 08 G 59/18<br>C 08 K 5/13<br>C 08 K 5/15<br>C 08 L 67/02 |
| Y | US-A-4 363 892 (A.L. SHAIN)<br>* claims 1-9; claim 1, line 10 - claim 2, line 40 *<br>--- | 1-6 | |
| A | DATABASE WPI, Derwent Publications Ltd., London, GB; DATABASE WPI, AN 88-334921, week 8847; & JP - A - 63248819 (MITSUBISHI CHEM. IND. KK)<br>* abstract *<br>--- | 1 | |
| P,A | EP-A-0 522 923 (CHEIL SYNTHETICS INC.)<br>* claims 1-8; page 2, line 39 - page 3, line 40 *<br>----- | 1-4 | |
| | | | **TECHNICAL FIELDS SEARCHED (Int. Cl.5)** |
| | | | C 08 G<br>C 08 K<br>C 08 L |

The present search report has been drawn up for all claims

| Place of search | Date of completion of the search | Examiner |
|---|---|---|
| BERLIN | 11-10-1993 | KRISCHE D |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)